# EUROPEAN PATENT APPLICATION

(11) **EP 4 663 043 A1**
(43) Date of publication of application: **17.12.2025**
(21) Application number: 24201891.9
(22) Date of filing: 23.09.2024
(51) Int. Cl.: A24F 40/30, A24F 40/42

(54) **VAPORIZER DEVICE**

(30) Priority: 10.06.2024 WO PCT/CN2024/098308
(71) Applicant: MMA Technology Co., Limited, Sha Tsui Kowloon (HK)
(72) Inventor: NING, Zhiwen, Shenzhen, 518106 (CN); PAN, Huagan, Shenzhen, 518106 (CN); CHU, Jianyong, Shenzhen, 518106 (CN)
(74) Representative: Modiano, Gabriella Diana

(57) **Abstract**

A cartridge for a vaporizer device includes a housing, a vaporizable material situated inside the housing, and a heating element configured to heat the vaporizable material. The cartridge is a first cartridge, and at least one connector is operable to connect the first cartridge to one of a second cartridge and a battery module. A vaporizer device and a method of using a vaporizer device are also disclosed.

## Description

### BACKGROUND

A vaporizer device vaporizes a material to produce vapor with a desirable smell or taste. In general a vaporizer device includes a battery, a cartridge containing a vaporizable material, and a heating element powered by the battery and operable to heat and vaporize the material. Typical vaporizers include, or are configured to receive a single cartridge. If a user prefers a different smell or taste, the cartridge must be removed and replaced with a different one. Moreover, a user is not able to combine smells or tastes with the typical single-cartridge vaporizer device.

### SUMMARY

In one particular example according to the present disclosure, a cartridge for a vaporizer device includes, among other possible things, a housing, a vaporizable material situated inside the housing, and a heating element configured to heat the vaporizable material. The cartridge is a first cartridge, and at least one connector is operable to connect the first cartridge to one of a second cartridge and a battery module.

In one particular example according to the present disclosure, a vaporizer device includes, among other possible things, a first cartridge, the first cartridge including a first vaporizable material, a second cartridge connected to the first cartridge, the second cartridge including a second vaporizable material, and a battery module configured to provide heat energy to the first cartridge and the second cartridge to vaporize the first and second vaporizable materials.

In one particular example according to the present disclosure, a cartridge for a vaporizer device includes, among other possible things, connecting a first cartridge to a battery module, the first cartridge including a first vaporizable material, connecting a second cartridge to the first cartridge, the second cartridge including a second vaporizable material, and providing heat energy to the first and second cartridges from the battery module such that the first and second vaporizable materials are vaporized into a first vaporized material and a second vaporized material.

### BRIEF DESCRIPTION OF THE DRAWINGS

Figures 1A-B illustrate an example vaporizer device. Figure 1A is a perspective view of the device and Figure 1B is a side view of the device.
Figures 2A-E illustrate an example battery module for the vaporizer device of Figures 1A-B. Figure 2A illustrates a bottom view of the batter module. Figure 2B illustrates a top view of the battery module. Figure 2C illustrates a side view of the battery module. Figure 2D illustrates a perspective view of the battery module. Figure 2E illustrates an exploded view of the battery module.
Figure 2F illustrates another example battery module.
Figures 3A-F illustrate an example cartridge for the vaporizer device of Figures 1A-B. Figure 3A illustrates a top view of the cartridge. Figure 3B illustrates a bottom view of the cartridge. Figure 3C illustrates a side view of the cartridge. Figures 3D-E illustrate perspective views of the cartridge. Figure 3F illustrates an exploded view of the cartridge. Figure 3G illustrates another example cartridge.
Figure 3G illustrates another example cartridge.
Figure 4A illustrates an example optional mouthpiece for the vaporizer device of Figures 1A-B. Figure 4B illustrates an exploded view of the mouthpiece.

### DETAILED DESCRIPTION

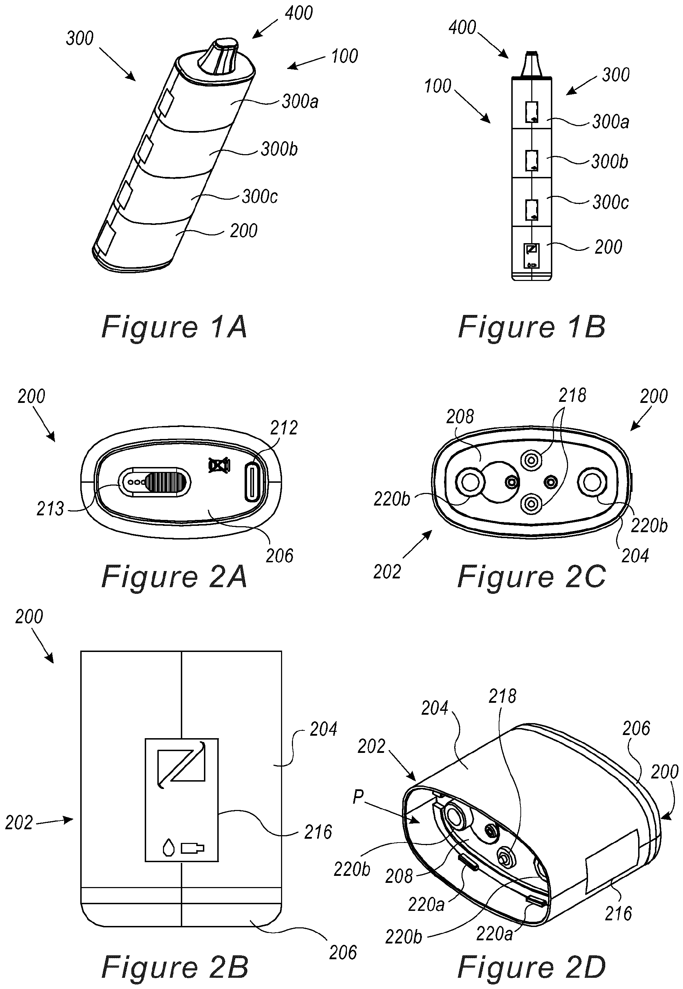

Figures 1A-B illustrate an example vaporizer device 100. The vaporizer device includes a battery module 200 and one or more cartridges 300. In some examples, the battery module and/or cartridges 300 may be received in a common housing. In the example of Figures 1A-B, there are three cartridges 300a/300b/300c, however more or less cartridges could be used. The vaporizer device 100 can be used to vaporize material to produce a scent or flavor. In the latter case, the vaporizer device 100 may further include an optional mouthpiece 400. In the former case, the vaporizer device may include means for releasing/dispersing vaporized scented material such as a fan and nozzle (not shown). Vaporizable materials are known in the art and include, by way of example only, oil-based compositions and organic solids and liquids.

The cartridge(s) 300 can have vaporizable material with different flavors/scents/active ingredients. This allows the user to customize the flavor/scent/effect of the vapor produced by the vaporizer device. For instance, the user may select a first cartridge 300a with a strawberry flavor, a second cartridge 300b with a kiwi flavor, and a third cartridge 300c with a pineapple flavor, which when used together provides a strawberry/kiwi/pineapple flavored vapor. As another example the user may select a first cartridge 300a with a rose scent and a second cartridge 300b with a lavender scent, to provide a rose/lavender scented vapor. The user may also interchange one of the first and second cartridges 300a/300b with a third cartridge 300c that has a lemon scent to provide a rose/lemon or lavender/lemon scented vapor. The user can also elect to use a single cartridge 300a or multiple cartridges 300a/300b/300c of the scent/flavor/active ingredient.

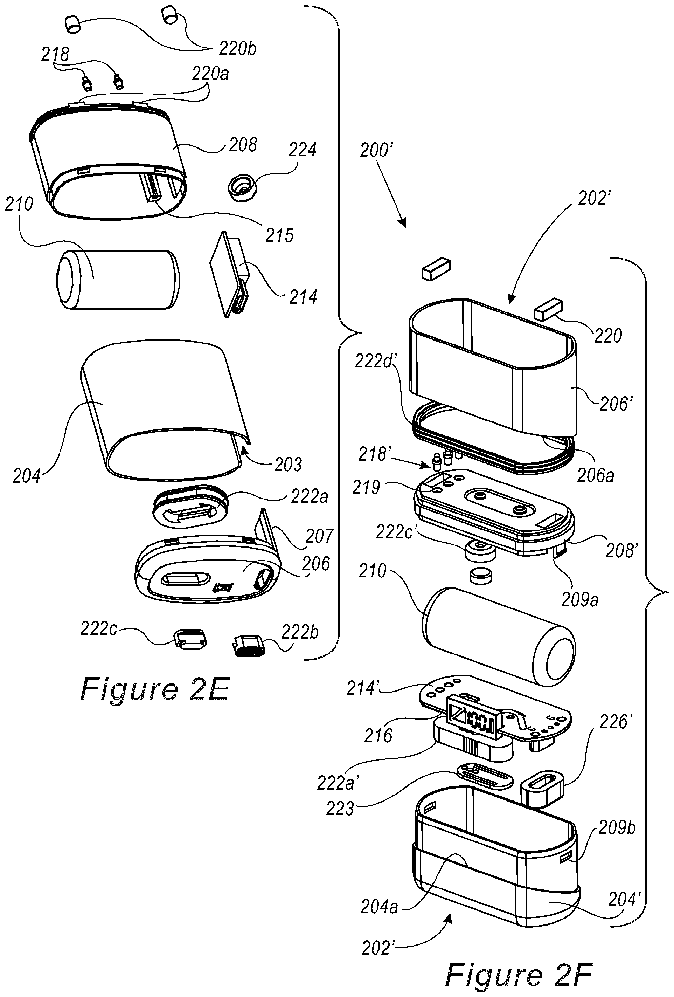

Figures 2A-E illustrate an example battery module 200. Figure 2A illustrates a bottom view of the battery module 200. Figure 2B illustrates a top view of the battery module 200. Figure 2C illustrates a side view of the battery module 200. Figure 2D illustrates a perspective view of the battery module 200. Figure 2E illustrates an exploded view of the battery module 200. The battery module 200 includes a housing 202, and the housing 202 in turn includes a side wall 204 and a bottom wall 206. In one example the side wall 202 includes an opening 203 and the bottom wall 204 includes a tab 207 configured to be received in the opening 203 as best seen in Figure 2E to connect the side wall 204 and bottom wall 206. In a particular example the side wall 204 is aluminum and the bottom wall 206 is plastic.

A support structure 208 is situated in the side wall 202 and engages with the bottom wall 206. The support structure 208 may be plastic in one example. The support structure 208 helps protect the other aspects of the battery module 200 where the side wall 202 comprises a relatively soft material. In one example, best seen in Figure 2D, the side wall 204 overhangs the support structure 208 to form a pocket P configured to receive a stepped portion S of the cartridge 300, which is discussed in more detail below.

A battery cell 210 is situated in the support structure 208. Any known battery cell 210 could be used. In a particular example, the battery cell 210 is an 1 100mAh battery. In one example, the battery cell 210 is a rechargeable battery such as a polymer lithium battery and the bottom wall 206 includes a charging port 212 operable to receive a charger (not shown) and charge the battery cell 210 as is well known. Any known charging port 212 could be used, such as a USC Type C port. The bottom wall 206 may also include an on/off switch 213 operable to engage with the battery cell 210 and/or the PBC 214 (discussed below) to turn on/off the vaporizer device 100.

In some examples the battery module 200 includes a printed circuit board (PCB) 214 with a display 216 (best seen in Figure 2B). The PCB 214 interacts with the battery cell 210 and the display 216 to show information such as an amount of charge remaining in the battery cell 210. Such systems including a battery cell 210, on/off switch 213, PCB 214, and display 216 are well known in the art and will not be further described herein. In some examples the PBC 214 is received in a set of rails 215 within the support structure 208.

The battery module 200 also includes two electrodes 218 to transmit energy from the battery cell 210 to the cartridge(s) 300 as will be discussed in more detail below. The electrodes 218 interact with terminals on the battery cell 210 as is well known in the art. In one example the electrodes 218 are copper electrodes.

The battery module 200 also includes one or more connectors 220 that are configured to engage with a cartridge 300. The connectors 220 in one example include tabs extending from the housing side wall 204 or the support structure 208. In the example of Figure 2A-E (as best seen in Figure 2E), the support structure 208 includes one or more tabs 220a configured to interface with the cartridge 300. The connectors 220 may also include one or more magnets 220b such as neodymium-based magnets configured to interface with magnets in the cartridge 300.

In one example, the battery module 200 includes one or more seals for limiting airflow through the battery module 200 thereby directing air through the cartridge(s) 300. The one or more seals can be rigid or semi-rigid plastic or compliant plastic such as silicone. In the particular example of Figures 2A-E (as best seen in Figures 2D-E), the battery module 200 includes a seal 222a situated between the battery cell 210 and the housing bottom wall 206 as well as additional seals 222b/222c situated within the housing 202.

In one example, the battery module 200 also includes a microphone 224. The microphone may be configured to play a sound indicating low battery, for example, as directed by the PBC 214. The use of microphones in conjunction with a PBC 214 in this manner is well known and will not be discussed further herein.

Figure 2F shows another example battery module 200'. The example battery module 200' of Figure 2F can be used in place of the battery module 200 discussed above with any of the other components for the vaporizer device 100 described herein. The example battery module 200' is similar to the battery module 200 but certain features will be described in detail below. It should be understood that any feature of the battery module 200 can be used with the battery module 200' and vice versa.

In this example, the battery module 200' includes a housing 202' which in turn includes a base portion 204' and a side wall 206'. In this example the base portion 204' includes a bottom wall. The base portion 204' also includes an angled step 204a which interfaces with a bottom edge 206a of the side wall 206'. A support structure 208' is situated in the side wall 206'. In this example the support structure 208' is a generally flat structure with a geometry that generally tracks the footprint of the base portion 204'. In certain examples the support structure 208' includes a tab 209a configured to be received in an opening 209b in the base portion 204' to connect the support structure 208' to the base portion 204'.

The battery module 200' also includes a battery cell 210.

A PCB 214' is received in the base portion 204'. In this example, the PCB 214' has a perimeter that tracks the footprint of the base portion 204'. The battery module 210 is situated between the PCB 214' and the support structure 208'. The PCB 214' may include a display 216.

In some examples one or more seals 222a'/222b' are situated between the PCB 214' and the base portion 204'. Likewise one or more seals 222c'/222d' are situated between the support structure 208' and the battery cell 210/side wall 206', respectively. An optional air regulator valve 223 may also be situated between the PCB 214' and the base portion 204'. The air regulator valve 223 controls airflow through the vaporizer device 100.

The battery module 200' also includes connectors 220 such as magnets for connecting the battery module 200' to a cartridge 300/300' as discussed herein.

The battery module 200' also includes electrodes 218' to transmit energy in from the battery cell 210 to the cartridge(s) 300/300' as will be discussed in more detail below. The electrodes 218' interact with terminals on the battery cell 210 as is well known in the art. Three electrodes 218' are included in the example of Figure 2F but more or less electrodes 218' can be used. In this example, the electrodes 218' are supported in openings 219 in the support structure 208'. The electrodes 218' in this example are spring electrodes however it should be understood that copper electrodes could also be used.

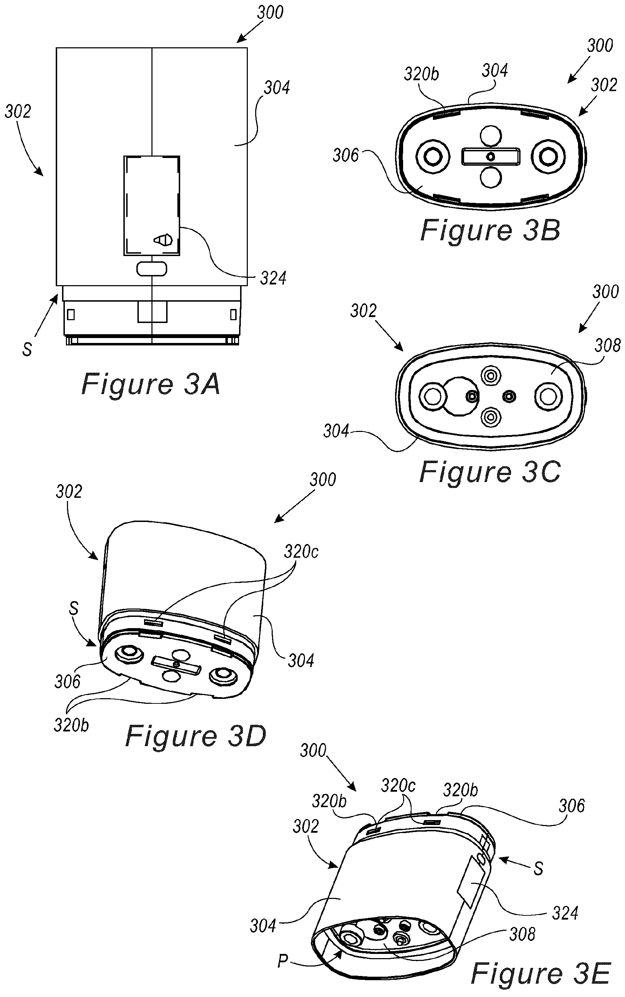

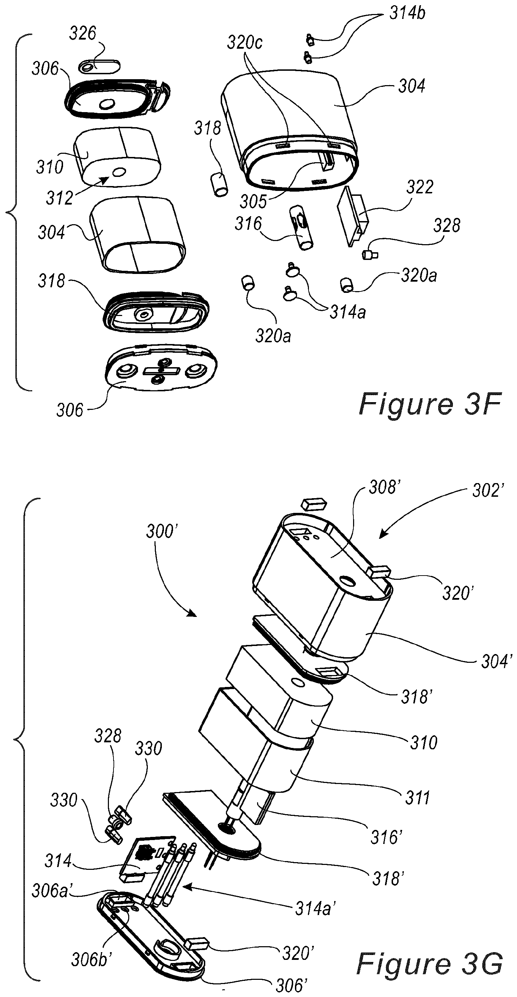

Turning now to Figures 3A-F, the cartridge 300 will now be described. Figure 3A illustrates a top view of the cartridge 300. Figure 3B illustrates a bottom view of the cartridge. Figure 3C illustrates a side view of the cartridge. Figures 3D-E illustrate perspective views of the cartridge. Figure 3F illustrates an exploded view of the cartridge. The cartridge 300 includes a housing 302 with a side wall 304, a bottom wall 306, and a top wall 308. In a particular example the side wall 304 and bottom wall 306 are rigid or semi-rigid plastic while the top wall 308 is a compliant silicone. In this example the top wall 308 provides sealing to encourage airflow through the vaporizable material within the cartridge 300 which will be described in more detail below.

In one example the cartridge 300 includes a step S between the bottom wall 306 and the side wall 304 such that a bottom portion of the cartridge 300 has a smaller diameter than the remainder of the cartridge 300. The smaller diameter bottom portion is configured to be received in the pocket P of the battery module 200, discussed above. At the same time, the side wall 304 overhangs the top wall 308 to form a pocket P similar to the pocket P of the battery module 200 (best seen in Figure 3E). In this way, a first cartridge 300a can receive the smaller diameter portion of a second cartridge 300b so that multiple cartridges can be used in series as shown in Figures 1A-B.

The cartridge 300 also includes vaporizable material situated in the housing 302. In one example the vaporizable material is dispersed in a liquid which is absorbed into a wick 310. The wick 310 includes an opening 312 configured to receive a heating element which is discussed in more detail below. In other example the vaporizable material can be provided in other forms. The wick 310 can be comprised of a cotton-like absorbent material such as polypropylene or polyethylene or combinations thereof.

The cartridge 300 includes a first set of electrodes 314a which are configured to interact with the electrodes 218 in the battery module 200 to transmit energy in the form of heat energy from the battery module 200 to the vaporizable material in the cartridge 300. The interaction may include direct contact. A heating element 316 such as a coil is configured to receive heat from the electrodes 314a. In one example the heating element 316 is a nichrome coil.

The cartridge 300 also includes a second set of electrodes 314b configured to transmit heat energy received in first cartridge 300a/300b/300c at the first set of electrodes 314a to another cartridge 300a/300b/300c connected to the first cartridge 300a/300b/300c as shown in Figures 1A-B. In this way, multiple cartridges 300a/300b/300c can be connected in series to a common battery module 200 thereby allowing for the customization of flavors/scents/active ingredients as discussed above. The electrodes 314a/314b can be the same or different. In one example the electrodes 314a/314b are copper electrodes. One or both of the first and second sets of electrodes 314a/314b can be copper coil electrodes.

Where the wick 310 is used, the heating element 316 is configured to be at least partially received in the opening 312 in the wick 310. Otherwise, the heating element 316 is arranged adjacent to the vaporizable material in the cartridge 300 so as to heat it. In one example, the heating element 316 is at least partially situated in a protective tube 318 such as a glass fiber tube which protects the wick 310 from direct contact with the heating element 316 and minimizes the likelihood of the wick 310 overheating and becoming burnt or singed.

In one example the cartridge 300 includes a seal 318 situated between the bottom wall 306 and the wick 310. The seal 318 encourages airflow through the wick 310 and the vaporizable material therein.

In one example the cartridge 300 includes connectors 320 configured to engage with another cartridge 300 and/or the battery module 200. For instance the connectors 320 may include one or more magnets 320a such as neodymium-based magnets which are operable to interact with magnets 220b in the battery module 200 to connect the battery module 200 to the cartridge 300. The magnets 320a may also be configured to interact with magnets 320a in other cartridges 300. In some examples the connectors 320 also include openings 320b configured to receive the tabs 220a in the battery module 200 which are discussed above. In some examples the connectors 320 include tabs 320c. The tabs 320c can be configured to interface with the mouthpiece 400 which will be discussed below. The tabs 320c may also be received in openings 320b of another cartridge 300 to connect multiple cartridges 300a/300b/300c to one another.

In some examples the cartridge 300 includes a PCB 322 with a display 324 (best seen in Figure 3A) which is configured to display information such as an amount of vaporizable material remaining in the cartridge 300. The PCB 322 may be received in a set of rails 305 in the housing side wall 304.

In some examples the cartridge 300 includes a cotton pad 326 on the top wall 308 to absorb any vaporizable material that may exit the cartridge 300 during use.

In some examples the cartridge 300 may include a button 328. The button 328 is operable to affect the power/voltage received by the heating element 316 via the first set of electrodes 314a as discussed above. In turn, the button 328 is operable to increase the amount of flavor/scent/active ingredient provided by the cartridge 300 to the user, as the amount of power/voltage received by the heating element 316 is directly related to the amount of the flavor/scent/active ingredient provided to the user. That is, the more power/voltage provided to the heating element 316, the more of the flavor/scent/active ingredient vaporized by the heating element 316, and the more of the flavor/scent/active ingredient provided to the user. In this way, the user may select one of multiple cartridges 300 to emphasize while using the vaporizer device 100 by pressing the button 328.

Figure 3G shows another example cartridge 300'. The example cartridge 300' of Figure 3G can be used in place of the cartridge 300 discussed above with any of the other components for the vaporizer device 100 described herein. The example cartridge 300' is similar to the cartridge 300 but certain features will be described in detail below. It should be understood that any feature of the cartridge 300 can be used with the cartridge 300' and vice versa.

The cartridge 300' includes a housing 302' which includes a bottom wall 306' and a side wall 304'. The side wall 304' includes a top wall 308'. A wick 310 is situated in a wick housing 311 which in turn is situated in the housing 302'. In this example seals 318' are situated between the wick 310/wick housing 311 and the bottom wall 306' and the wick 310/wick housing 311 and the side wall 304', respectively. The seals 318' could be silicon seals, in some example.

The cartridge 300' also includes a PCB 314. In this example the PCB 314 is supported in an opening 306a' in the bottom wall 306'.

The cartridge 300' also includes a set of electrodes 314a' which are configured to interact with the electrodes 218/218' in the battery module 200/200' to transmit energy in the form of heat energy from the battery module 200/200' to the vaporizable material in the cartridge 300/300'. In this example there are three electrodes in the set 314a' however more or less electrodes could be used. In this example the electrodes are spring electrodes however copper electrodes/copper coil electrodes could also be used. In this example the electrodes are supported in openings 306b' in the bottom wall 306'. The electrodes 314a' are operable to also transmit energy to other cartridges similar to the second set of electrodes 314b in the cartridge 300 as discussed above, however, in other examples, another set of electrodes could be used in the cartridge 300' as in the cartridge 300 discussed above.

The cartridge 300 also includes a heating element 316'. The heating element 316' is in one example received at least partly in the wick housing 311 and may extend through an opening in one or both seals 318'.

The cartridge 300' also include connectors 320' such as magnets for connecting to another cartridge 300/300' and/or the battery module 200/200'.

In some examples the cartridge 300' may include a button 328.

In some examples the cartridge 300' includes one or more LED lights 330 associated with the PCB 314, button 328, and/or battery module 200/200' as is well known in the art. Pressing of the button 328 may activate one or both of the LED lights 330 via the PCB 314 to give an indication to a user. In other examples more or less LED lights 300 could be used.

The LED lights 330 may give other indications to a user. For instance, one or both of the LED lights 300 may shine in a color such as green to indicate the vaporizer device 100 is on. As another example, one or both of the LED lights 330 may shine in a first color to indicate the battery cell 210 is charging and another color to indicate the battery cell 210 is fully charged. Yet another color, such as red, could be used to indicate the battery cell 210 needs charging. In one example, flashing could also be used as in indicator. For instance a flashing red light can indicate a malfunction within the vaporizer device 100.

In another example where more LED lights 330 are used, such as four lights, the lights can flash in series to make certain indications as well. For example the lights could flash in a particular order such as 1-2-3-4 where each of the LED lights 300 correspond to a number to make a first indication and in another order such as 4-3-2-1 to make a second indication. The lights could also be used together to indicate battery power. For instance two of four lights shining could indicate the battery cell 210 is halfway charged.

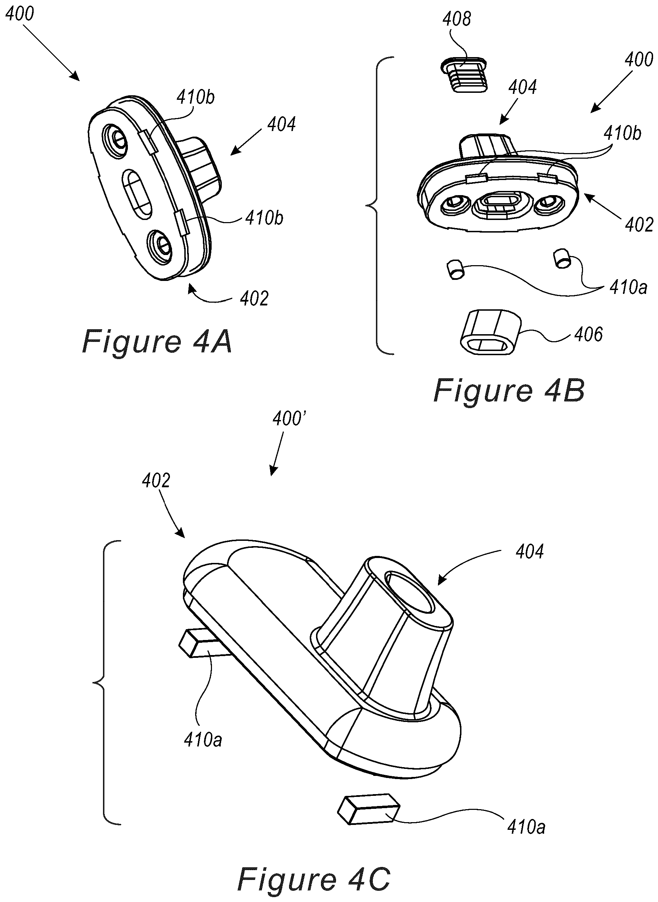

Turning now to Figures 4A-B, the optional mouthpiece 400 will now be described. The optional mouthpiece 400 includes a top portion 402 and an outlet 404 extending from the top portion 402. The mouthpiece 400 may also include a filter piece 406 comprising a paper-like material such as a polypropylene- or polyethylene-based material for filtering output from the cartridge(s) 300. The mouthpiece 400 may also include a silicone plug 408 at the outlet 404 which improves user comfort then using the mouthpiece 400. The mouthpiece also includes connectors 410 configured to connect the mouthpiece to a cartridge 300. For instance the connectors 410 may include magnets 410a such as neodymium magnets configured to interact with magnets 320a in the cartridge 300. The connectors 410 may also include openings 410b configured to receive tabs 320c of the cartridge 300 discussed above.

In operation, a user applies suction to the mouthpiece 400 via the outlet 404, causing air to draw though the cartridge(s) 300a/300b/300c. The battery module 200 causes the heating element 316 to heat the vaporizable material and vaporize it. The vaporized material travels with the air into the person's mouth. Where multiple cartridges 300a/300b/300c are used, the air includes mixed vaporized material from each of the cartridges 300a/300b/300c. In other examples where a mouthpiece 400 is not used, other means of drawing air through the cartridge can be used such as the fan and nozzle discussed above.

Figure 4C shows another example mouthpiece 400'. The mouthpiece 400' is similar to the mouthpiece 400 except that in the mouthpiece 400, the outlet 404 is centered with respect to the rest of the mouthpiece 400 whereas in the mouthpiece 400' the outlet 404 is offset from the center.

Having fully described at least one embodiment of the present invention, other equivalent or alternative designs according to the present invention will be apparent to those skilled in the art. While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A cartridge for a vaporizer device, comprising:
a housing;
a vaporizable material situated inside the housing; and
a heating element configured to heat the vaporizable material;
wherein the cartridge is a first cartridge, at least one connector operable to connect the first cartridge to one of a second cartridge and a battery module.

2. The cartridge of claim 1, wherein the vaporizable material is on a liquid absorbed in a wick situated in the housing.

3. The cartridge of claim 1, wherein the at least one connector includes a magnet, or
wherein the at least one connector includes an opening configured to receive a tab, or
wherein the at least one connector includes a tab configured to be received in an opening.

4. The cartridge of claim 1, further comprising a printed circuit board with a display, the display configured to display an amount of vaporizable material remaining in the cartridge.

5. A vaporizer device, comprising:
a first cartridge, the first cartridge including a first vaporizable material;
a second cartridge connected to the first cartridge, the second cartridge including a second vaporizable material; and
a battery module configured to provide heat energy to the first cartridge and the second cartridge to vaporize the first and second vaporizable materials.

6. The vaporizer device of claim 5 wherein the first and second vaporizable materials are different from one another.

7. The vaporizer device of claim 6, wherein the first and second vaporizable materials are different flavors.

8. The vaporizer device of claim 6, wherein the first and second vaporizable materials are different scents.

9. The vaporizer device of claim 6, wherein the first and second vaporizable include different active ingredients.

10. The vaporizer device of claim 5, where the first cartridge is connected to the battery by at least one magnet, or
wherein the second cartridge is connected to the first cartridge by at least one magnet.

11. The vaporizer device of claim 10, further comprising a mouthpiece configured to receive suction from a user, whereby a user draws air through the first and second cartridges,
wherein the mouthpiece can be connected to one of the first and second cartridges by at least one magnet.

12. A method of using a vaporizer device, comprising:
connecting a first cartridge to a battery module, the first cartridge including a first vaporizable material;
connecting a second cartridge to the first cartridge, the second cartridge including a second vaporizable material; and
providing heat energy to the first and second cartridges from the battery module such that the first and second vaporizable materials are vaporized into a first vaporized material and a second vaporized material.

13. The method of claim 12, further comprising drawing air through the vaporizer device such that air exiting the vaporizer device includes a mixture of the first and second vaporized materials.

14. The method of claim 13, wherein the step of drawing air is by applying suction to a mouthpiece.

15. The method of claim 12, further comprising interchanging one of the first and second cartridges for a third cartridge, and providing heat energy to the third cartridge from the battery module such that the third vaporizable material is vaporized into a third vaporized material, wherein the first and second vaporizable materials can be different from one another.
